Europäisches Patentamt

European Patent Office

Office européen des brevets

(11) Publication number: **0 172 698**

**A1**

## EUROPEAN PATENT APPLICATION

(21) Application number: 85305551.5

(22) Date of filing: 05.08.85

(51) Int. Cl.⁴: **C 03 C 23/00**
**C 03 C 3/091, C 03 C 3/108**

(30) Priority: 09.08.84 US 638940

(43) Date of publication of application:
26.02.86 Bulletin 86/9

(84) Designated Contracting States:
BE CH DE FR GB IT LI

(71) Applicant: OWENS-ILLINOIS, INC.
One SeaGate
Toledo, OH 43666(US)

(72) Inventor: Ceriani, James M.
39, Arrowwood Ct.
Deptford New Jersey(US)

(72) Inventor: Clayton, Robert L.
Riverview Apartments
Millville New Jersey(US)

(72) Inventor: Schmersal, Lawrence J.
2579, Dahliadel Drive
Vineland New Jersey(US)

(74) Representative: Votier, Sidney David et al,
CARPMAELS & RANSFORD 43, Bloomsbury Square
London WC1A 2RA(GB)

(54) Method for increasing the chemical durability of borosilicate glass tubing and articles made therefrom.

(57) A method of increasing the chemical durability of borosilicate glass tubing and also hollow articles made therefrom by adding about 2 to 3% by volume of a fluorine-containing gas, i.e. $C_2F_6$, to the inflating air used to form the tubing using conventional tube-forming methods. The alkalinity of the borosilicate glass tubing surfaces, as well as the surfaces of containers, including ampoules made therefrom, is reduced by as much as 70% by weight or more.

- 1 -

## METHOD FOR INCREASING THE CHEMICAL DURABILITY OF BOROSILICATE GLASS TUBING AND ARTICLES MADE THEREFROM.

The present invention relates to a method of treating the interior surfaces of borosilicate glass tubing as the tubing is formed, the treatment comprising adding a fluorine-containing gas to the inflating air used in forming the tubing, the resultant tubing and hollow articles made therefrom having increased chemical durability.

Background of the Invention

In the past, in order to improve the chemical durability of glass articles fabricated from borosilicate glass, a surface treatment, following the converting operation, was employed. The treatment process, which normally utilized gaseous sulfuric acid to accomplish the desired result, suffers from high variability in its overall effectiveness. Factors such as glass temperature and the relative durability of the bulk borosilicate glass can influence the consistency of the end products, such as glass ampoules and vials.

Product uniformity is therefore a major problem with existing post-forming processes for borosilicate glass. There has been a need for a method of improving the chemical durability of bulk borosilicate glass tubing to eliminate the need for the previously described post-forming treatments. There is also a need for a method of increasing the chemical durability of borosilicate glass tubing and hollow articles made therefrom, thereby eliminating the operational and quality control problem now encountered in the present post-forming operations.

There is known a method for soda-lime compositions for increasing the chemical durability thereof. It is known to treat the soda-lime glass during the formation of bulk material such as soda-lime glass tubing by adding a fluorine-containing gas to the inflating air used to form tubing or blown bottles. U.S. Patent No: 3,709,672 discloses the treatment of glass tubing with fluorine, the Patent also referring to U.S.Patent No: 3,314,772, which discloses the treatment of hot glass surfaces of soda-lime glass containers with fluorine compounds. In addition, U.S. Reissue Patent No: 26,760 discloses treating a newly formed soda-lime glass article such as a beer bottle with a decomposable halogen-containing compound such as trichloromonofluoromethane (see Example 1).

However, in general, the art, as far as is known, had not thought of treating borosilicate glass tubing with a fluorine-containing gas because of the perception that the lower alkali content of such borosilicate composition (compared to soda-lime glass compositions) would not allow the borosilicate glass to be sufficiently influenced by the treating process to render a significant alteration to its durability.

In addition, if one did attempt to treat newly formed borosilicate glass tubing with a fluorine-containing gas using optimum amounts thereof for soda-lime glass, say 0.25% by volume of the inflating air, the chemical durability would not be significantly increased as will be set forth hereinafter.

Objects of the Invention

It is an object of the present invention to provide a method of increasing the chemical durability of borosilicate glass tubing. It is also an object of the present invention to provide a method of increasing the chemical durability of hollow glass articles made from borosilicate glass tubing.

The Invention

The present invention provides a method of increasing the chemical durability of borosilicate glass tubing, comprising the steps of:

(A)　forming a length of borosilicate glass tubing, and

(B)  simultaneously, while forming the tubing, adding to the inflating air a sufficient amount of a fluorine-containing gas to reduce the alkalinity of the interior surfaces by as much as at least about 70% by weight and thereby increase the chemical durability of the tubing and glass articles made therefrom.

The present invention also provides a method of increasing the chemical durability of glass articles (for example articles such as pharmaceutical vials, ampoules and the like, made from borosilicate Type 1, Class B laboratory glass) fabricated from borosilicate glass tubing; comprising the steps of:

(A)  forming borosilicate glass tubing;

(B)  introducing a fluorine-containing gas, preferably $CF_3 \cdot CF_3$, in the inflating air used to form the tubing to treat the interior surfaces of the tubing to reduce the alkalinity and increase the chemical durability;     and

(C)  forming a hollow glass article from the tubing of steps (A) and (B) to provide an article having increased chemical durability.

The present invention is especially adapted to increase the chemical durability of borosilicate glass tubing and pharmaceutical vials, ampoules, cartridges, and the like made from the borosilicate glass compositions described in the Moser U.S.Patent No: 4,386,164. The disclosure of this Patent is incorporated by reference to show barium-free borosilicate Type 1, Class B laboratory glass.  The borosilicate glass tubing is made of a Type 1, Class B laboratory glass according to the standard specification set forth in ASTM E 438-80a, having a linear coefficient of expansion (0° to 300°C, cm/cm-°C x $10^{-7}$) of about 48 to 56 and having a chemical durability, maximum titration equivalent of 0.02N $H_2SO_4$/10g of glass of 1.0 ml, the composition consisting essentially of the following ingredients in approximate percent by weight:

| Ingredient | Percent |
|---|---|
| $SiO_2$ | 70-74 |
| $B_2O_3$ | 9-13 |
| $Al_2O_3$ | 5-8 |
| $Na_2O$ | 5-8 |
| $K_2O$ | 0-4 |
| CaO | 0-3 |
| MgO | 0-1 |

the glass composition having an annealing point of about 550°C to 585°C, a liquidus of about 1730°F to 1760°F and a Log n at the liquidus of about 5.0 to 5.5.

As set forth in the above mentioned Moser Patent, a preferred borosilicate glass has the following composition in approximate percent by weight:

| Ingredient | Percent |
|---|---|
| $SiO_2$ | 71-73 |
| $B_2O_3$ | 10-12 |
| $Al_2O_3$ | 6-7 |
| $Na_2O$ | 6-7 |
| $K_2O$ | 1-3 |
| CaO | 0.2-2 |
| MgO | 0.1-0.3 |

As shown in the working examples of the Moser Patent, an excellent glass has the following ingredients in approximate percent by weight:

| Ingredient | Percent |
|---|---|
| $SiO_2$ | 71.8 |
| $B_2O_3$ | 11.5 |
| $Al_2O_3$ | 6.8 |
| $Na_2O$ | 6.4 |
| $K_2O$ | 2.7 |
| CaO | 0.5 |
| MgO | 0.2 |

The above specific glass is a highly preferred glass and, in accordance with the present invention, such treated glass tubing, preferably treated with

$CF_3 \cdot CF_3$, provides the bulk glass tubing for forming glass vials, ampoules and cartridges with high chemical durability.

The highly preferred fluorine-containing gas is $CF_3 \cdot CF_3$, ($C_2F_6$) being commercially available from duPont under the Trademark "Freon 116".

The process of the present invention is suitable for improving the chemical durability of Type 1 borosilicate glasses and particularly borosilicate glasses in which the amount of alkali ($Na_2O + K_2O$) is generally about 4 or 5 up to 10 to 12 percent by weight, with $Na_2O$ usually being present in about 3 or 4 up to 8 or 9 weight percent.

Other fluorinated hydrocarbon compounds that are in the form of a gas at room temperature or below can be used, including $CH_2F \cdot CH_2F$; $CHF_3$, $CHF_2 \cdot CHF_2$; and $C_3F_8$. $CF_3 \cdot CF_3$ has a boiling point of $-78°C$ and hence, other fluorocarbons such as $CF_4$ (b.p. $-128°C$); $C_3F_8$ (b.p. $-38°C$); $CHF_3$ (b.p. $-82°C$), in which the gas has, for instance, a b.p. of about $-5$ to $-128°C$, can be used to replace all or part of the preferred $CF_3 \cdot CF_3$.

The percent by volume of the fluorine-containing gas in the inflating air should generally be about 1 up to about 8.

The amount of fluorine-containing gas, especially in the case of $CF_3 \cdot CF_3$, should preferably be at least about 2% up to as high as about 3% by volume of the inflating air used in forming the borosilicate tubing in order to reduce the alkalinity by at least about 70% by weight. More preferably, the amount of gas is about 2.5 to 3% by volume, which generally reduces the amount of alkalinity by as much as at least about 80 to 85% by weight.

Borosilicate glass tubing, using conventional tube forming processes and $CF_3 \cdot CF_3$ ($C_2F_6$) in the inflating air, was made from the following borosilicate compositions in which the ingredients are given in approximate percent by weight:

| Ingredients | Amber 203 | RS-7 |
|---|---|---|
| $SiO_2$ | 69.4 | 70.2 |
| $B_2O_3$ | 10.5 | 10.8 |
| $Al_2O_3$ | 5.26 | 6.6 |
| $Fe_2O_3$ | 0.54 | - |
| $TiO_2$ | 2.78 | - |
| CaO | 0.42 | 0.6 |
| MgO | 0.18 | 0.2 |
| BaO | 2.02 | 2.26 |
| $Na_2O$ | 6.0 | 6.11 |
| $K_2O$ | 2.15 | 2.4 |
| FeO | 0.46 | - |
| CeO | | 0.75 |
| PbO | | 0.004 |

The amount of $C_2F_6$ in the inflating air was measured by flowmeters. The durability of the resultant tubing, as well as ampoules made therefrom, was measured by the USP Water Attack Test. This test is a standard test and the results are reported in Titers in ml. of acid required to neutralize the alkalinity in the water used in the test. As known in the art and, for instance, set forth in the previously mentioned U.S.Patent No: 3,314,772, the standard USP Water Attack Test involves filling a test sample with distilled water and autoclaving at a maximum temperature of 248°F at 15 psi for one hour. The water in the attack solution is then titrated against 0.02N $H_2SO_4$ and the amount of acid required to neutralize the alkali in the water is reported as the measure of chemical durability and the corrosion which has taken place in the test.

The following Table shows the test results, untreated tubing being used as control samples.

## TABLE

### TEST RESULTS

#### Amber 203 Glass Trials

$C_2F_6$

| Concentration | Tubing Titers | 2 ml Ampoule Titers |
|---|---|---|
| Control | 0.21 ml | 0.28 ml |
| 0.2% | 0.21 | - |
| 1.5% | 0.20 | - |
| 3.0% | 0.01 | 0.05 |

#### RS-7 Glass Trials

$C_2F_6$

| Concentration Flowmeter | Actual | Tubing Titers | pH change of Tubing Rinse Water |
|---|---|---|---|
| Control | 0 | 0.12 ml | 0.7 |
| 0.5% | - | 0.13 | 0.6 |
| 1.0% | 0.06% | 0.10 | 0.6 |
| 1.5% | 0.3% | 0.11 | 0.2 |
| 2.0% | 1.2% | 0.08 | -0.1 |
| 2.5% | 2.2% | 0.01 | -0.5 |
| 3.0% | 2.8% | 0.01 | -0.7 |

In the Table, a negative value in the pH change of the tubing rinse water indicates the presence of acids.

The test results show the superior results when about 2 to 3% by volume of the fluorine-containing gas is used. It can be seen that the amount of alkalinity in the control samples is at least about three times the 0.08 ml or 0.1 ml desired maximum of the treated samples. When low amounts of gas are used, say in the order of 0.25% by volume (optimum for soda-lime glass), there is no significant increase in chemical durability.

The great increase of chemical durability is shown by the test results. Apparently, during the tubing forming process, the $C_2F_6$ gas, for example, decomposes to fluorine gas and/or hydrogen fluoride which reacts with and neutralizes the surface alkali of the glass. Fluoride ions penetrate the surface and are removed only be extended extraction. Rinsing will not remove all of the fluorides present. This phenomenon illustrates that the neutralization is not a simple surface alkali extraction; for if it were, the resultant film of fluoride salts would be easily removed by a rinsing process and fluoride would not be present in the extract solutions. The fluoride ions apparently enter the glass mixture at the surface, thereby yielding a more resistant glass.

In accordance with the present invention, it can be seen that when a fluorine-containing gas such as $C_2F_6$ is added to the inflating air for forming borosilicate glass tubing, increased chemical durability is achieved. The interaction of the fluorine and glass surface alkali at high temperatures reduces the overall surface alkalinity and therefore improves the chemical durability of the resultant product. Containers such as ampoules, vials and cartridges, made from the treated borosilicate tubing, also surprisingly exhibit the same durability improvement.

## CLAIMS

1.      A method of increasing the chemical durability of tubing made from a borosilicate glass composition, comprising the steps of

(A)   forming the borosilicate glass tubing;  and

(B)   introducing a fluorine-containing gas into the inflating air used to form the tubing to treat the interior surface of the tubing to reduce the alkalinity of the surface and improve the chemical durability thereof.

2.      A method of increasing the chemical durability of borosilicate glass composition tubing, comprising the steps of:

(A)   forming a length of borosilicate glass tubing,   and

(B)   simultaneously, while forming the tubing, adding to the inflating air a sufficient amount of a fluorine-containing gas to reduce the alkalinity  of the interior surfaces by as much as at least about 70% by weight and thereby increase the chemical  durability of the tubing and glass articles made therefrom.

3.      A method as claimed in claim 1 or 2 in which the borosilicate glass tubing is made of a Type 1, Class B laboratory glass according to the standard specification set forth in ASTM E 438-80a having a linear coefficient of expansion ($0°$ to $300°C$, $cm/cm-°C$ x $10^{-7}$) of about 48 to 56 and having a chemical durability, maximum titration equivalent of $0.02N$ $H_2SO_4/10$ g of glass of 1.0 ml, the composition consisting essentially of the following ingredients in approximate percent by weight:

| Ingredient | Percent |
|---|---|
| $SiO_2$ | 70-74 |
| $B_2O_3$ | 9-13 |
| $Al_2O_3$ | 5-8 |
| $Na_2O$ | 5-8 |
| $K_2O$ | 0-4 |
| $CaO$ | 0-3 |
| $MgO$ | 0-1 |

the glass composition having an annealing point of about 550°C to 585°C, a liquidus of about 1730°F to 1760°F and a Log n at the liquidus of about 5.0 to 5.5.

4. A method as claimed in any of claims 1 to 3 in which the borosilicate glass has the following composition in approximate percent by weight:

| Ingredient | Percent |
|---|---|
| $SiO_2$ | 70.2 |
| $B_2O_3$ | 10.8 |
| $Al_2O_3$ | 6.6. |
| $Fe_2O_3$ | - |
| $TiO_2$ | - |
| CaO | 0.6 |
| MgO | 0.2 |
| BaO | 2.26 |
| $Na_2O$ | 6.11 |
| $K_2O$ | 2.4 |
| FeO | - |
| CeO | 0.75 |
| PbO | 0.004 |

5. A method as claimed in claim 1 or 2 in which the glass composition has the following ingredients in approximate percent by weight:

| Ingredient | Percent |
|---|---|
| $SiO_2$ | 69.4 |
| $B_2O_3$ | 10.5 |
| $Al_2O_3$ | 5.26 |
| $Fe_2O_3$ | 0.54 |
| $TiO_2$ | 2.78 |
| CaO | 0.42 |
| MgO | 0.18 |
| BaO | 2.02 |
| $Na_2O$ | 6.0 |
| $K_2O$ | 2.15 |
| FeO | 0.46 |

6. A method as claimed in any of claims 1 to 5 in which the fluorine-containing gas is a hydrocarbon containing fluorine.

7. A method as claimed in claim 6 in which the fluorine-containing gas is $CF_3 \cdot CF_3$.

8. A method as claimed in any of claims 1 to 7 in which the amount of fluorine-containing gas is about 2 to 3% by volume of the inflating air.

9. A method as claimed in claim 1 or 2 in which the fluorine-containing gas is $CF_3 \cdot CF_3$, said gas is used in an amount of about 2.5 to 3% by volume of the inflating air, and the borosilicate glass consists essentially of the following ingredients in percent by weight:

| Ingredient | Percent |
| --- | --- |
| $SiO_2$ | 70-74 |
| $B_2O_3$ | 9-13 |
| $Al_2O_3$ | 5-8 |
| $Na_2O$ | 5-8 |
| $K_2O$ | 0-4 |
| $CaO$ | 0-3 |
| $MgO$ | 0-1 |

10. A method as claimed in any of claims 1 to 9 in which the alkalinity of the borosilicate glass surface is reduced by as much as at least about 85% by weight.

11. A method as claimed in claim 1 or 2 in which an amount of fluorine-containing gas is used that is equivalent to that of using about 2 to 3% by volume of $CF_3 \cdot CF_3$ based on the volume of inflating air, the amount of extractable alkalinity of the tubing being no more than about 0.10 ml in accordance with the USP Water Attack Titer Test.

12. A method of increasing the chemical durability of glass articles fabricated from borosilicate glass tubing; comprising steps (A) and (B) as set forth in any of claims 1 to 11; and

(C) forming a hollow glass article from the tubing of steps (A) and (B) to provide an article having increased chemical durability.

13. A method as claimed in claim 12 in which the amount of fluorine-containing gas used is about 2 to 3% by volume of the inflating air, and the resultant hollow articles have an extractable alkali of no more than about 0.1 ml measured according to the USP Water Attack Titer Test, the amount of extractable alkali in untreated articles being at least about three times that of the treated articles.

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | FR - A - 2 515 633 (INSTITUT NATIONAL DU VERRE)  <br> * Page 1, lines 3-7; claims 1,2,7-10 * | 1,6,8 | C 03 C 23/00 <br> C 03 C 3/091 <br> C 03 C 3/108 |
| D,Y | US - A - 4 386 164 (MOSER) <br> * Abstract; column 4, table I, right column * | 1,3-5 | |
| A | AU - B1 - 39 425/78 (ACI OPERATIONS PTY. LTD.) <br> * Claims 1-8; page 2, lines 17-21 * | 1,2,6,8 | |
| D,A | US - A - 3 314 772 (POOLE) <br> * Totality * | 1,6 | |
| A | GB - A - 1 537 653 (INDUSTRIE ZIGNAGO S. MARGHERITA S.P.A.) <br> * Page 1, lines 9-21, 42-83 * | 1,6 | TECHNICAL FIELDS SEARCHED (Int. Cl 4) <br><br> C 03 C <br> C 03 B |

The present search report has been drawn up for all claims

| Place of search | Date of completion of the search | Examiner |
|---|---|---|
| VIENNA | 11-11-1985 | HAUSWIRTH |